# EUROPÄISCHE PATENTSCHRIFT

(11) **EP 4 605 722 B1**
(45) Veröffentlichungstag und Bekanntmachung des Hinweises auf die Patenterteilung: **30.09.2026**
(21) Anmeldenummer: 24703924.1
(22) Anmeldetag: 02.02.2024
(51) Int. Cl.: G01M 3/18, G01M 3/40, H01M 10/48, H02H 5/08, H02H 7/18

(54) **ANORDNUNG FÜR EIN BAUTEIL EINES KRAFTFAHRZEUGS SOWIE BAUTEIL**
ARRANGEMENT FOR A COMPONENT OF A MOTOR VEHICLE, AND COMPONENT
AGENCEMENT POUR COMPOSANT DE VÉHICULE AUTOMOBILE, ET COMPOSANT

(30) Priorität: 17.02.2023 DE 102023000532
(43) Veröffentlichungstag der Anmeldung: 27.08.2025
(73) Patentinhaber: Mercedes-Benz Group AG, 70372 Stuttgart (DE)
(72) Erfinder: BRESSEL, Arnd, 41540 Dormagen (DE); FRANZ, Diana, 70327 Stuttgart (DE); ROTH, Daniel, 71083 Herrenberg (DE)
(74) Vertreter: Novagraaf Group
(86) Internationale Anmeldenummer: PCT/EP2024/052579
(87) Internationale Veröffentlichungsnummer: WO 2024/170299

(56) Entgegenhaltungen:
- DE-A1- 102013 201 411
- DE-A1- 102022 002 966
- US-A- 5 440 917

## Beschreibung

Die Erfindung betrifft eine Anordnung für ein Bauteil eines Kraftfahrzeugs gemäß dem Oberbegriff von Patentanspruch 1. Ferner betrifft die Erfindung ein Bauteil.

In den Gehäusen von beispielsweise Hochvoltbatterien und weiteren Hochvolt-Bauteilen des Antriebskreislaufs, beispielsweise Ladegeräten, Leistungselektroniken, E-Maschinen, kann es bei Ansammlungen von Wasser zu kritischen Situationen durch ungewollte Kriechströme oder elektrische Kurzschlüsse kommen. Zur Erkennung eintretenden Wassers werden elektrische Sensoren verwendet, die bei Wasserkontakt eine Veränderung zum Beispiel des Stromflusses, der Leitfähigkeit, des Widerstandes oder der Permittivität detektieren und über geeignete Auswertungsverfahren anzeigen. Hierbei ist das Ziel, große Wassermengen, die zu einer permanenten elektrisch leitenden Verbindung der spannungsführenden Komponenten mit zum Beispiel zum auf Masse liegenden Gehäuse oder einem weiteren elektrischen Leiter führen, zu detektieren. In der Praxis zeigen die verwendeten Sensoren jedoch eine prinzipbedingte Empfindlichkeit auch gegenüber sehr kleinen, tropfenförmigen Flüssigkeitsmengen, wie sie z. B. auch bei der zum Druckausgleich notwendigen Belüftung der Komponenten durch Kondensation von Luftfeuchtigkeit bei Kalt-Warm-Wechseln im Fahrzeugbetrieb auftreten können. Diese Kondensationsmengen sind in der Regel tropfenförmig und werden durch die auftretenden Fliehkräfte im Bauteil bewegt - im Rahmen dieser Bewegung können sie kurzzeitig den Sensor erreichen und eine Falsch-Positiv-Meldung eines hohen Flüssigkeitsstandes auslösen. Bisherige Ansätze zur Lösung lösen dieses Problem nur unter deutlicher Erhöhung der Detektionsgrenze bei Eintritt großer Flüssigkeitsmengen und verringern daher die Schutzfunktion des Messelementes.

Die DE 10 2013 201 306 A1 beschreibt eine Batterie, welche ein Batteriegehäuse sowie mindestens eine Batteriezelle umfasst, welche in dem Batteriegehäuse angeordnet ist. Ferner umfasst die Batterie mindestens ein thermisches Element, welches von einem Fluid durchströmbar und dazu ausgebildet ist, die mindestens eine Batteriezelle in einem vordefinierten Temperaturbereich zu halten. Die Batterie weist mindestens einen Feuchtsensor auf, welcher dazu ausgebildet ist, den Feuchtgehalt der Atmosphäre innerhalb des Batteriegehäuses, um die mindestens eine Batteriezelle herum zu bestimmen.

Die DE 10 2014 006 829 A1 betrifft einen elektrischen Speicher, der mindestens ein Speicherelement und einen positiven und negativen Pol aufweist, wobei die Pole in stromleitender Verbindung mit dem Speicherelement stehen, wobei zwischen den Polen eine Spannung von maximal 60 V anliegt und wobei der Elektromotor an die Pole angeschlossen ist. Es ist ein Wassersensor vorgesehen, der feststellt, ob sich einer der Pole in Kontakt mit Wasser befindet, und wobei der Wassersensor in Wirkverbindung mit einer Abschalteinrichtung steht, welche zur Unterbrechung der stromleitenden Verbindung zwischen mindestens einem der Pole und dem Speicherelement dient.

Die DE 10 2021 001 764 A1 betrifft ein Bauteil für ein Fahrzeug mit einem von Wandungen umschlossenen Hohlraum und einem Feuchtesensor zur Detektion eines Feuchteeintritts in den Hohlraum. Es ist vorgesehen, dass der Hohlraum eine Öffnung aufweist und der Feuchtesensor einen Sensorkörper und wenigstens ein Messelement aufweist, wobei wenigstens ein Abschnitt des Sensorkörpers die Öffnung gegenüber einer Umgebung abdichtend verschließt und das Messelement durch die Öffnung dem Hohlraum zugewandt ist.

Weiterhin offenbart DE 10 2013 201411 A1 einen Flüssigkeitssensor.

Aufgabe der vorliegenden Erfindung ist es eine Anordnung sowie ein Bauteil zu schaffen, mittels welchem zuverlässiger ein tatsächlicher Wassereintritt in das Bauteil detektiert werden kann.

Diese Aufgabe wird durch eine Anordnung für ein Bauteil gemäß Anspruch 1 gelöst. Vorteilhafte Ausgestaltungsformen sind in den Unteransprüchen angegeben.

Ein Aspekt der Erfindung betrifft eine Anordnung für ein Bauteil des Kraftfahrzeugs, mit zumindest einem Wassersensor und mit einer Oberfläche des Bauteils, wobei zwischen dem Wassersensor und der Oberfläche ein erster Abstand eingestellt ist, und wobei der Wassersensor dazu ausgebildet ist, bei einem Überschreiten eines Wasserlevels zwischen der Oberfläche und dem Wassersensor in einem Sensorbereich des Wassersensors größer oder gleich dem ersten Abstand, ein Steuersignal zu erzeugen.

Es ist dabei vorgesehen, dass auf der Oberfläche ein zusätzliches wassersaugfähiges Element ausgebildet ist, welches den Sensorbereich umringt.

Insbesondere ist es somit die Kombination eines elektrischen Messsystems zur Erfassung von elektrischer Leitfähigkeit, einer Veränderung der Permittivität einer Kondensatorkennlinie durch Elektrolyteintritt, elektrochemischer Impedanz bei Anlegen eines Wechselstroms oder des Stromflusses durch Zutritt von Flüssigkeit in einen Zwischenraum zweier elektrischer Leiter mit einer das Messsystem in einem Schutzabstand umgebenden Matte/Pressverbund aus einem polymeren oder vorzugsweise metallischen Gewebe, einem Spinnvlies, einem Faserverbundwerkstoff, einem Schwamm oder einem ähnlich aufgebauten, saugenden, vorzugsweise für Wasser kapillar wirkenden metallischen oder polymeren Werkstoff, der einen anlaufenden Wassertropfen zunächst in den Verbund aufnimmt/aufsaugt und somit den Zutritt von Kleinstmengen von Flüssigkeit, zum Beispiel aus Kondensationsprozessen innerhalb eines belüfteten Gehäuses, verhindert.

Dadurch ist es ermöglicht, dass beispielsweise Hochvolt-Bauteile gegen Schäden durch Kriechströme und Kurzschluss bei kleinen Flüssigkeitspegeln ohne Risiko der Fehldetektion von zum Beispiel im Betrieb unkritischen Tropfen aus Kondensationsvorgängen geschützt werden kann. Durch die sichere Detektion bereits kleinerer Flüssigkeitseintritte im Vergleich zu Sensoren mit größeren Abständen kann eine frühzeitige Warnung vor Ausfall und Schaden realisiert werden. Das Bauteil, insbesondere kostenintensive Batterien wie zum Beispiel elektrische Hochvoltbatterien oder elektrische Antriebe, können dann gegebenenfalls getrocknet beziehungsweise repariert werden. Ferner kann eine Vermeidung von Fahrzeugausfällen durch Falsch-Positiv-Anzeigen realisiert werden, insbesondere bei der Verwendung von Hochvolt-Sensorik als Sensorprinzip. Die Sensorauslösung führt gegebenenfalls zur Abscheidung der Batterie beziehungsweise zum Werkstattaufenthalt oder einem Liegenbleiben des Fahrzeugs.

Ferner ist vorgesehen, dass das wassersaugfähige Element ein zusätzliches Sensorelement zum Erfassen einer Feuchtigkeit im wassersaugfähigen Element aufweist. Insbesondere ist somit ermöglicht, dass beispielsweise bei der vorher erwähnten Ausgestaltungsform das Sensorelement über die metallische Struktur bereitgestellt werden kann, sodass auch frühzeitig bereits festgestellt werden kann, dass sich Feuchtigkeit im Inneren des wassersaugfähigen Elements befindet.

Gemäß einer vorteilhaften Ausgestaltungsform ist eine Höhe des wassersaugfähigen Elements größer als der erste Abstand. Mit anderen Worten überragt das wassersaugfähige Element den Abstand zwischen dem Wassersensor und der Oberfläche. Dadurch ist es ermöglicht, dass zuverlässig ein Wassertropfen entsprechend über das wassersaugfähige Elemente aufgenommen werden kann.

Weiterhin vorteilhaft ist, wenn das wassersaugfähige Element einen zweiten Abstand zum Sensorbereich aufweist, wobei der zweite Abstand bevorzugt zwischen 0,5 mm und 20 mm ausgebildet ist. Insbesondere ist somit die Ergänzung des Sensors erweitert durch das vollflächig umgebende wassersaugfähige Element, welches besonders bevorzugt einen Abstand von 0,5 mm bis 20 mm aufweist. Somit ist es ermöglicht, dass ein Wassertropfen bereits frühzeitig, insbesondere bevor dieser beim Wassersensor tatsächlich eintrifft, entsprechend aufgesaugt werden kann.

Ferner hat es sich als vorteilhaft erwiesen, wenn das wassersaugfähige Element mit einem Kapillareffekt ausgebildet ist. Vorzugsweise kann der Kapillareffekt mit metallischen oder polymeren Werkstoffen realisiert werden. Insbesondere ist das wassersaugfähige Element so dimensioniert, dass die Höhle des Gewebes vorzugsweise die Ausdehnung der zu erwartenden Tropfen übersteigt, jedoch bei massivem Flüssigkeitseintritt noch vor Erreichen eines kritischen Flüssigkeitsniveaus von oben überspült wird.

Eine weitere vorteilhafte Ausgestaltungsform sieht vor, dass das wassersaugfähige Elemente aus Cr-, oder CrNi, oder CrNiMo-Stahl ausgebildet ist. Dadurch kann eine besonders bevorzugte Ausführungsform des wassersaugfähigen Elements bereitgestellt werden, welches insbesondere saugfähig ist und gleichzeitig, welches insbesondere hoch legiert ist und somit zusätzlich noch für weitere elektrische Sensorik bereitgestellt werden kann.

Eine weitere vorteilhafte Ausgestaltungsform sieht vor, dass der erste Abstand zwischen 0,1 mm und 10 mm ausgebildet ist. Insbesondere, je nach Bauteil, kann ein entsprechender erster Abstand eingestellt werden. Insbesondere ist es somit möglich, dass je nach Bauteil erste Abstände und somit unterschiedliche Detektionshöhen innerhalb des Bauteils reduziert werden können. Somit ist die Anordnung für eine Vielzahl von Bauteilen anwendbar.

Ferner hat es sich als vorteilhaft erwiesen, dass das wassersaugfähige Element gewebeartig ausgebildet ist. Insbesondere kann das wassersaugfähige Element in Form eines Pressverbunds aus Gewebe, ein Spinnflies, einen Faserverbundwerkstoff, ein Schwamm oder ähnliches ausgebildet sein. Es können insbesondere sowohl metallische als auch polymere Werkstoffe als Gewebe bereitgestellt werden. Somit kann äußerst zuverlässig eine Tropfenform über das wassersaugfähige Element aufgesaugt werden.

Ein weiterer Aspekt der Erfindung betrifft ein Bauteil für ein Kraftfahrzeug mit zumindest einer Anordnung nach dem vorhergehenden Aspekt. Das Bauteil weist insbesondere ein Gehäuse auf, wobei in dem Gehäuse die Anordnung ausgebildet ist. Insbesondere ist das Bauteil ein Bauteil einer elektrischen Komponente, insbesondere einer Hochvolt-Komponente des Kraftfahrzeugs.

Somit betrifft ein weiterer Aspekt der Erfindung auch ein Kraftfahrzeug mit einem Bauteil nach dem vorhergehenden Aspekt. Das Kraftfahrzeug ist dabei insbesondere als zumindest teilweise elektrisch betriebenes beziehungsweise vollelektrisch betriebenes Kraftfahrzeug ausgebildet.

Vorteilhafte Ausgestaltungsformen der Anordnung sind als vorteilhafte Ausgestaltungsformen des Bauteils sowie des Kraftfahrzeugs anzusehen.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: drei schematische Ansichten einer Ausführungsform der Anordnung;
- Fig. 2: einen schematischen Ablauf einer Tropfenaufnahme gemäß einer Ausführungsform; und
- Fig. 3: einen weiteren schematischen Ablauf gemäß einer tatsächlichen Wasserdetektion mittels der Anordnung gemäß Fig. 2.

In den Figuren sind gleiche oder funktionsgleiche Elemente mit den gleichen Bezugszeichen versehen.

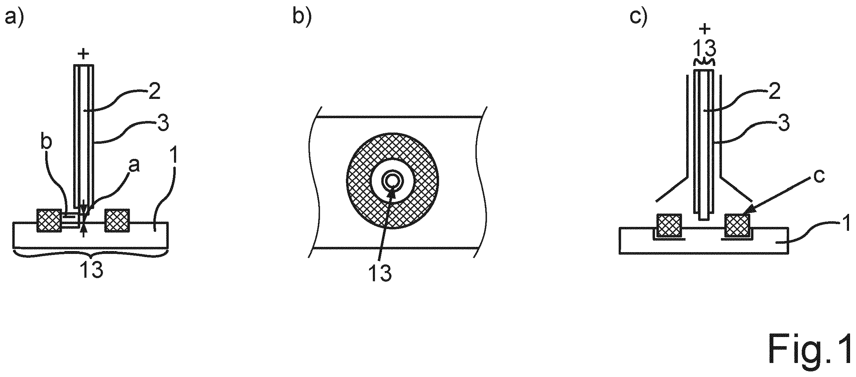

Fig. 1 zeigt drei schematische Ansichten einer Ausführungsform einer Anordnung für ein Bauteil eines nicht dargestellten Kraftfahrzeugs. Das Bauteil kann beispielsweise ein Hochvoltbatteriespeicher sein. Insbesondere ist eine Kombination eines elektrischen Messsystems zur Erfassung von elektrischer Leitfähigkeit, Veränderung der Permittivität einer Kondensatorkennlinie durch Elektrolyteintritt, elektrochemischer Impedanz bei Anlegen eines Wechselstroms oder des Stromflusses durch Zutritt von Flüssigkeit in einen Zwischenraum zweier elektrischer Leiter mit einer das Messsystem in einem Schutzabstand umgebenden Matte/Pressverbund aus einem polymeren oder vorzugsweise metallischen Gewebe, einem Spinnvlies, einem Faserverbundwerkstoff, einem Schwamm oder einem ähnlich aufgebauten, saugenden, vorzugsweise für Wasser kapillar wirkenden metallischen oder polymeren Werkstoff, der einen anlaufenden Wassertropfen zunächst in den Verbundes aufnimmt/aufsaugt und somit den Zutritt von Kleinstmengen von Flüssigkeit (z. B. aus Kondensationsprozessen innerhalb eines belüfteten Gehäuses) verhindert, gezeigt.

In einer bevorzugten Ausführung wird das Schutzelement, also ein wassersaugfähiges Element 6, aus einem gepressten metallischen Gewebe aus hochlegiertem Cr- oder CrNi- oder CrNiMo-Stahl ausgeführt, das zur Vermeidung von Kontaktkorrosionsphänomenen auf einer polymeren Unterlage angebracht werden kann. Besonders bevorzugt erfolgt die Montage des Schutzelementes durch Integration in eine den Sensor umgebene Schutzverkleidung mit Aussparungen zum Zutritt von Flüssigkeit. Hierbei wird die räumliche Ausdehnung des Aufnahmeelementes so gewählt, dass sowohl die Menge der aufnehmbaren Flüssigkeit als auch die Höhe des Elementes so dimensioniert sind, dass ein Eintreten größerer Flüssigkeitsmengen zu einer kurzfristigen Überschreitung des Speichervolumens bzw. zu einem Überspülen des Schutzelementes und damit zur beabsichtigten kurzfristigen Auslösung des Sensorelementes führt. Hierbei ist besonders bevorzugt eine vertikale Ausdehnung des Schutzelementes von 1 - 20 mm vorgesehen. Fig. 1 zeigt die vereinfachte Darstellung eines Flüssigkeitssensors: gegenüber einer metallischen Oberfläche 1 z. B. eines Gehäuses ist ein Wassersensor 2, z. B. ein metallischer Draht, der durch ggf. eine Isolierung 3 in Teilbereichen abgeschirmt wird, mit einer der Detektionsschwelle bzw. dem zur Detektion vorgesehenen Flüssigkeitspegel entsprechendem ersten Abstand a, üblicherweise in der Größenordnung von 0,1 - 10 mm, angebracht. Als Messprinzip können hier verschiedene elektrische Messverfahren angewendet werden (z. B. Detektion von Stromfluss, Widerstandsänderung oder Kapazität bei Schaltung der Oberfläche 1 und des Wassersensors 2 als Kondensator). Treten nun größere Flüssigkeitsmengen in das Gehäuse ein (Fig. 1 b), wird der Luftspalt zwischen der Oberfläche 1 und dem Wassersensor 2 geschlossen und es kommt zur Ausbildung einer elektrisch detektierbaren Verbindung (Stromfluss oder Veränderung der Permittivität) - dies entspricht der beabsichtigten Funktion des Sensors.

Die erfindungsgemäße Ausführung in der Fig. 1 (a Seitenansicht, b Aufsicht) löst das Problem der Fehldetektion bei Flüssigkeitstropfen 5 durch Ergänzung des Messaufbaus durch das den Wassersensor 2 bevorzugt vollflächig in einem zweiten Abstand b, besonders bevorzugt mit einem zweiten Abstand b von 0,5 bis 20 mm umgebende wassersaugfähige Element 6 aus einer Matte/ einem Pressverbund aus einem Gewebe, einem Spinnvlies, einem Faserverbundwerkstoff, einem Schwamm oder einem ähnlich aufgebauten, saugenden, vorzugsweise für Wasser kapillar wirkenden metallischen oder polymeren Werkstoff (nachfolgend Gewebe genannt). Dieses ist so dimensioniert, dass die Höhe des Gewebes vorzugsweise die Ausdehnung der zu erwartenden Tropfen übersteigt, jedoch bei massivem Flüssigkeitseintritt noch vor Erreichen eines kritischen Flüssigkeitsniveaus von oben überströmt wird.

In einer bevorzugten Ausführung (Fig. 1 c) wird das Gewebe in eine den Sensor umgebene Schutzverkleidung, die zum Zutritt der Flüssigkeit zumindest lokal durchbrochen ist, integriert. Hierbei sind die Durchbrüche in der Schutzverkleidung so dimensioniert, dass ein Überströmen der Gewebestruktur durch eine zumindest lokal das Gewebe überragende Ausdehnung c des Durchbruches sichergestellt ist.

In einer besonders bevorzugten Variante ist das Gewebe als metallisches Gewebe, insbesondere als Gewebe aus hochlegiertem Cr-, CrNi, oder CrNiMo-Stahl, ausgeführt und mit einer elektrischen Verbindung als zusätzliches Sensorelement oder alleinige Elektrode ausgeführt.

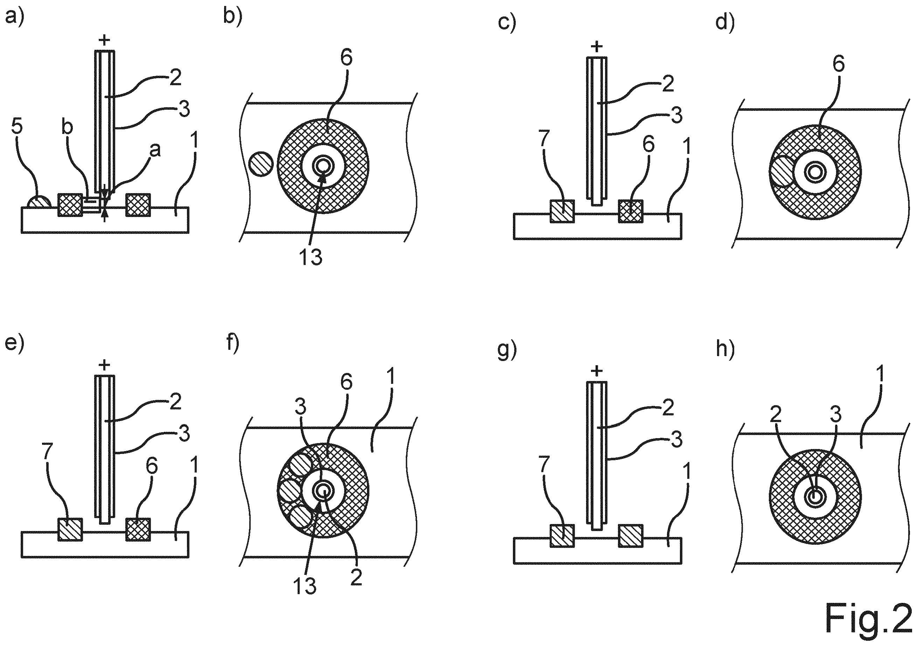

Fig. 2 zeigt die Funktionsweise des wassersaugfähigen Elements 6 zum Schutz gegen tropfenförmige Flüssigkeitsmengen. In Fig. 2 a/b ist ein Flüssigkeitstropfen 5 vor dem Erreichen des wassersaugfähigen Elements 6 abgebildet. Trifft dieser nun durch z. B. Beschleunigung des Fahrzeugs/Bauteils auf das wassersaugfähigen Elements 6 auf, wird der Tropfen von diesem aufgenommen und im Gewebe als im Gewebeelement aufgenommene Flüssigkeit 7 verteilt und kann nicht zum Sensorbereich zwischen der Oberfläche 1 und dem Wassersensor 2 vordringen (Fig. 2 c/d). Durch die Verteilung des Tropfens in der Gewebestruktur wird zudem die Verdunstung der Flüssigkeit erleichtert - hiermit ist das Gewebe auf Dauer erneut aufnahmefähig. Bei Zutritt einer erhöhten Menge tropfenförmiger Flüssigkeit verteilt sich diese durch die Kapillarwirkung im Gewebe zunächst lokal (Fig. 2 e/f), nach kurzer Zeit gleichmäßig (Fig. 2 e/f).

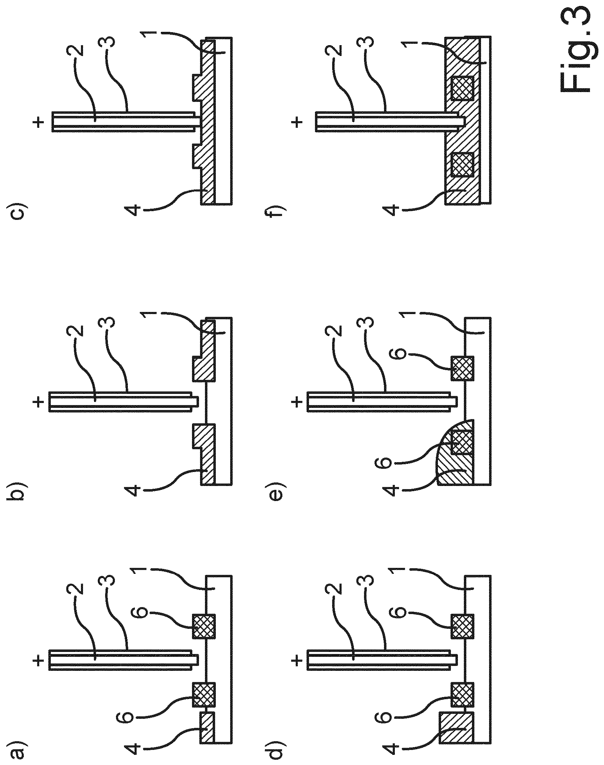

Fig. 3 zeigt das Verhalten bei Eintritt größerer Flüssigkeitsmengen. Bei einer Anschwellung unterhalb der Ausdehnung des Gewebes (Fig. 3 a-c) kommt es nach Umströmung und nachfolgender Sättigung der Aufnahmefähigkeit des wassersaugfähigen Elements 6 (Fig. 3 b) zum nur minimal verzögerten Durchringen der Flüssigkeit eines Sensorbereich 13, insbesondere zwischen der Oberfläche 1 und dem Wassersensor 2, und zur Auslösung des Sensors durch Kontakt mit der Flüssigkeitsoberfläche (Fig. 3 c) als Flüssigkeitsfilm 4. Kommt es zum schlagartigen Eintritt sehr hoher Flüssigkeitsmengen (Fig. 3 d-f), überströmt die Flüssigkeit das wassersaugfähigen Elements 6 sofort (Fig. 3 e) und die elektrische Detektion der Flüssigkeit erfolgt ohne Verzögerung (Fig. 3 f).

## Patentansprüche

1. Anordnung für ein Bauteil eines Kraftfahrzeugs, mit zumindest einem Wassersensor (2) und mit einer Oberfläche (1) des Bauteils, wobei zwischen dem Wassersensor (2) und der Oberfläche (1) ein erster Abstand (a) eingestellt ist, und wobei der Wassersensor (2) dazu ausgebildet ist, bei einem Übersteigen eines Wasserlevels zwischen der Oberfläche (1) und dem Wassersensor (2) in einem Sensorbereich (13) des Wassersensors (2) größer oder gleich dem ersten Abstand (a), ein Steuersignal zu erzeugen, **dadurch gekennzeichnet, dass** auf der Oberfläche (1) ein zusätzliches wassersaugfähiges Element (6) ausgebildet ist, welches den Sensorbereich (13) umringt, wobei das wassersaugfähige Element (6) ein zusätzliches Sensorelement zum Erfassen einer Feuchtigkeit im wassersaugfähigen Element (6) aufweist.

2. Anordnung nach Anspruch 1,
**dadurch gekennzeichnet, dass**
eine Höhe des wassersaugfähigen Elements (6) größer ist, als der erste Abstand (a).

3. Anordnung nach Anspruch 1 oder 2,
**dadurch gekennzeichnet, dass**
das wassersaugfähige Element (6) einen zweiten Abstand (b) zum Sensorbereich (13) aufweist, wobei der zweite Abstand (b) bevorzugt zwischen 0,5 mm und 20 mm ausgebildet ist.

4. Anordnung nach einem der vorhergehenden Ansprüche,
**dadurch gekennzeichnet, dass**
das wassersaugfähige Element (6) mit einem Kapillareffekt ausgebildet ist.

5. Anordnung nach Anspruch 4,
**dadurch gekennzeichnet, dass**
das wassersaugfähige Element (6) aus Cr-, oder CrNi, oder CrNiMo-Stahl ausgebildet ist.

6. Anordnung nach einem der vorhergehenden Ansprüche,
**dadurch gekennzeichnet, dass**
der erste Abstand (a) zwischen 0,1 mm und 10 mm ausgebildet ist.

7. Anordnung nach einem der vorhergehenden Ansprüche,
**dadurch gekennzeichnet, dass**
das wassersaugfähige Element (6) gewebeartig ausgebildet ist.

8. Bauteil für ein Kraftfahrzeug mit zumindest einer Anordnung nach einem der Ansprüche 1 bis 7.

9. Bauteil nach Anspruch 8,
**dadurch gekennzeichnet, dass**
die Anordnung in einem Gehäuse des Bauteils angeordnet ist.

## Claims

1. Arrangement for a component of a motor vehicle, comprising at least one water sensor (2) and a surface (1) of the component, with a first distance (a) being set between the water sensor (2) and the surface (1), and the water sensor (2) being designed to generate a control signal when a water level between the surface (1) and the water sensor (2) in a sensor region (13) of the water sensor (2) exceeds a level greater than or equal to the first distance (a),
**characterized in that**
an additional water-absorbent element (6) which surrounds the sensor region (13) is formed on the surface (1),
the water-absorbent element (6) having an additional sensor element for detecting moisture in the water-absorbent element (6).

2. Arrangement according to claim 1,
**characterized in that**
a height of the water-absorbent element (6) is greater than the first distance (a).

3. Arrangement according to claim 1 or 2,
**characterized in that**
the water-absorbent element (6) has a second distance (b) from the sensor region (13), the second distance (b) being preferably between 0.5 mm and 20 mm.

4. Arrangement according to any of the preceding claims,
**characterized in that**
the water-absorbent element (6) is designed with a capillary effect.

5. Arrangement according to claim 4,
**characterized in that**
the water-absorbent element (6) is made of Cr-, or CrNi, or CrNiMo-steel.

6. Arrangement according to any of the preceding claims,
**characterized in that**
the first distance (a) is between 0.1 mm and 10 mm.

7. Arrangement according to any of the preceding claims,
**characterized in that**
the water-absorbent element (6) is designed in the manner of tissue.

8. Component for a motor vehicle having at least one arrangement according to any of claims 1 to 7.

9. Component according to claim 8,
**characterized in that**
the arrangement is arranged in a housing of the component.

## Revendications

1. Agencement pour un composant d'un véhicule automobile, comportant au moins un capteur d'eau (2) et une surface (1) du composant, dans lequel une première distance (a) est définie entre le capteur d'eau (2) et la surface (1), et dans lequel le capteur d'eau (2) est conçu pour générer un signal de commande lorsqu'un niveau d'eau entre la surface (1) et le capteur d'eau (2), dans une zone de capteur (13) du capteur d'eau (2), dépasse ou est égal à la première distance (a), **caractérisé en ce que**
un élément (6) supplémentaire absorbant l'eau est conçu sur la surface (1), lequel élément entoure la zone de capteur (13),
dans lequel
l'élément (6) absorbant l'eau présente un élément capteur supplémentaire destiné à détecter la présence d'humidité dans l'élément (6) absorbant l'eau.

2. Agencement selon la revendication 1,
**caractérisé en ce que**
une hauteur de l'élément (6) absorbant l'eau est supérieure à la première distance (a).

3. Agencement selon la revendication 1 ou 2,
**caractérisé en ce que**
l'élément (6) absorbant l'eau présente une seconde distance (b) par rapport à la zone de capteur (13), dans lequel la seconde distance (b) est de préférence conçue entre 0,5 mm et 20 mm.

4. Agencement selon l'une des revendications précédentes,
**caractérisé en ce que**
l'élément (6) absorbant l'eau est conçu avec un effet capillaire.

5. Agencement selon la revendication 4,
**caractérisé en ce que**
l'élément (6) absorbant l'eau est conçu en acier au Cr, au CrNi ou au CrNiMo.

6. Agencement selon l'une des revendications précédentes,
**caractérisé en ce que**
la première distance (a) est conçue entre 0,1 mm et 10 mm.

7. Agencement selon l'une des revendications précédentes,
**caractérisé en ce que**
l'élément (6) absorbant l'eau est conçu semblable à un tissu.

8. Composant pour un véhicule automobile comportant au moins un agencement selon l'une des revendications 1 à 7.

9. Composant selon la revendication 8,
**caractérisé en ce que**
l'agencement est agencé dans un boîtier du composant.
